# EUROPEAN PATENT APPLICATION

(11) **EP 4 424 134 A1**
(43) Date of publication of application: **04.09.2024**
(21) Application number: 24155380.9
(22) Date of filing: 01.02.2024
(51) Int. Cl.: A01C 7/00, A01C 15/00, B65G 67/00, A01M 7/00

(54) **AGRICULTURAL SYSTEM**

(30) Priority: 01.03.2023 US 202318176881
(71) Applicant: Deere & Company, Moline, IL 61265 (US)
(72) Inventor: WONDERLICH, GRANT J, 68163 Mannheim (DE); DEMSKI, NATHAN R, 68163 Mannheim (DE); POTTER, BENJAMIN C, 68163 Mannheim (DE)
(74) Representative: Reichert, Christian

(57) **Abstract**

An agricultural system (100) is disclosed. The agricultural system (100) comprising: a material target quantity identification system (338) configured to identify a target quantity of material to transfer from a tender vehicle (106) to an agricultural work machine (102) and generate a target quantity identifier indicative of the target quantity; a material measurement system (334) configured to measure an amount of material transferred from the tender vehicle (106) to the agricultural work machine (102) and generate a transferred amount indicator indicative of the amount of material transferred from the tender vehicle (106) to the agricultural work machine (102); a quantity transfer tracking system (340) configured to receive the target quantity identifier and the transferred amount indicator and generate a material transfer output indicative of a relationship between the target quantity and the transferred amount; and a material conveyance system controller (342) configured to generate a control signal to control transfer of the material from the tender vehicle (106) to the agricultural work machine (102) based on the material transfer output.

## Description

### FIELD OF THE DESCRIPTION

The present description relates to agricultural equipment. More specifically, the present description relates to a system that controls and communicates information corresponding to material transferred from a tender vehicle to an agricultural work machine.

### BACKGROUND

There are a wide variety of different types of agricultural work machines that can be used to apply material to a field. Such equipment can include, for instance, air seeders and planters. Air seeders and planters can apply seed to a field, along with fertilizer, herbicide or insecticide, or other commodities. Other agricultural work machines that can be used to apply material or commodities to a field include sprayers, and other vehicles and machines.

These types of agricultural work machines often rely on a tender vehicle to carry more of the product being applied to the field to the agricultural work machine, to refill the agricultural work machine so that it can continue its operation.

Other agricultural work machines also rely on tender vehicles. For instance, tillage work machines consume fuel and often rely on a tender vehicle to bring more fuel so that the tillage operation can be continued.

The discussion above is merely provided for general background information and is not intended to be used as an aid in determining the scope of the claimed subject matter.

### SUMMARY

A tender vehicle transfers material from the tender vehicle to an agricultural work machine. The amount of material transferred is measured and the tender vehicle automatically communicates the amount of the transferred material to the agricultural work machine. The amount of material to be loaded into the tender vehicle, prior to delivering the material to the agricultural work machine, can also be calculated and used in loading the tender vehicle with a desired amount of material.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 is a block diagram of one example of an agricultural system.
FIG. 2 is a partial pictorial, partial block diagram of an air seeder.
FIG. 3 is a partial pictorial, partial block diagram of a planting machine with row units.
FIG. 4 is a block diagram showing one example of a material transfer control system.
FIG. 5A and 5B (collectively referred to herein as FIG. 5) illustrate a flow diagram showing one example of the operation of the agricultural system and material transfer control system.
FIG. 6 is a block diagram showing one example of the agricultural system deployed in a remote server environment.
FIGS. 7, 8, and 9 show examples of mobile devices that can be used in the architectures and systems described herein.
FIG. 10 is a block diagram of one example of a computing environment that can be used in the architectures and systems described herein.

### DETAILED DESCRIPTION

As discussed above, there are a wide variety of different types of agricultural work machines that depend on a tender vehicle to replenish the agricultural work machine with material that may be applied to the field or consumed by the agricultural work machine. Often, the tender vehicle is simply loaded with the material and then travels to the agricultural work machine and attempts to load a desired amount of material into the agricultural work machine. However, this often means that the tender vehicle is either loaded with more material than necessary to replenish the agricultural work machine or with an insufficient amount of material.

Also, it is helpful to know the amount of material that is transferred from the tender vehicle to the agricultural work machine, because this allows the systems and operator on the agricultural work machine to know how much of the worksite can be treated before refilling, the amount of time that the machine can operate before refilling, among other things. In some current systems, the operator of the tender vehicle attempts to observe or otherwise identify the amount of material transferred to the agricultural work machine and to report that audibly (such as using a radio, a cellphone, etc.) to the operator of the agricultural work machine. However, this is error prone in that the operator of the tender vehicle may measure or estimate the amount of transferred material improperly, may communicate the wrong number, forget the amount, etc.

The present discussion thus proceeds with respect to a system which may calculate or otherwise identify a target amount of material that an agricultural work machine needs to be replenished with. That target amount of material can then be loaded into the tender vehicle from a material reservoir system, such as a semi trailer, or another place that stores the material for loading onto the tender vehicle. The tender vehicle then proceeds to the agricultural work machine where the material is transferred from the tender vehicle to the agricultural work machine. The amount of material transferred is measured and automatically communicated to the agricultural work machine where that amount can be used in controlling the agricultural work machine.

It will be noted that the agricultural work machine can be any type of agricultural work machine that applies material to a field (such as a seeder, a planter, an implement or machine that applies fertilizer, herbicide, insecticide, a sprayer, etc.). Similarly, the agricultural work machine can be a machine that consumes material (such as fuel or electricity) that needs to be replenished. An agricultural work machine that consumes the material may also include a tillage machine that consumes fuel, an electric vehicle that consumes power from a battery, etc. The tender vehicle may be any type of vehicle that replenishes the agricultural work machine. Therefore, the tender vehicle can bring seed, herbicide, fertilizer, other commodity, fuel, replacement batteries or a battery charger, or other items that are used to replenish the agricultural work machine so that the agricultural work machine can continue its operation in the field.

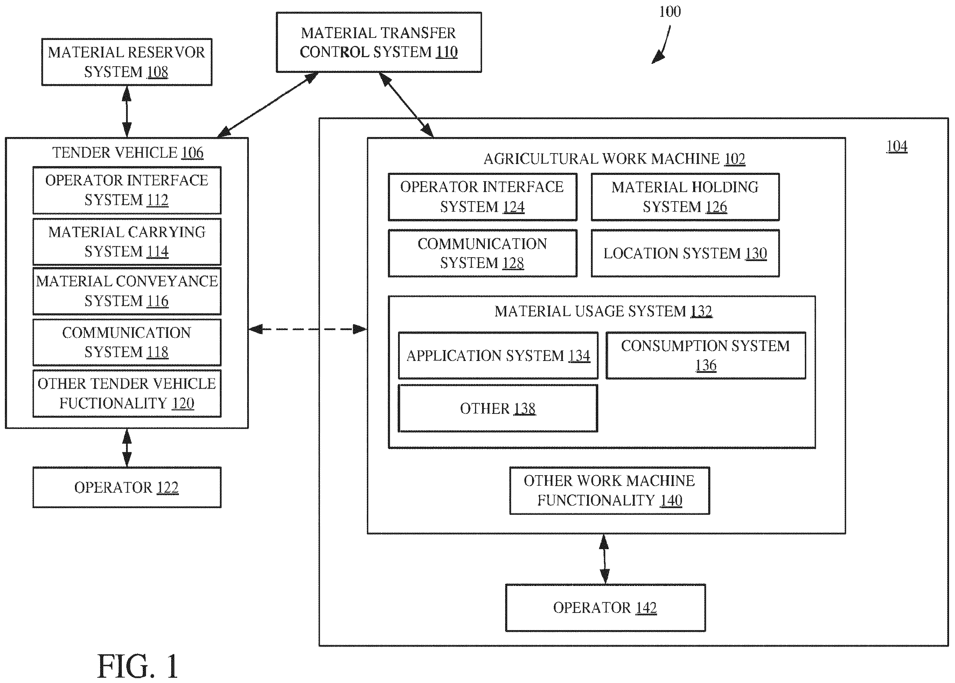

FIG. 1 is a block diagram showing one example of an agricultural system 100 in which an agricultural work machine 102 is operating at a worksite, such as a field 104. The agricultural work 102 machine applies material to field 104 or consumes material that is replenished by a tender vehicle 106. Tender vehicle 106 can, itself, be loaded or filled with material from a material reservoir system 108 which may be, for instance, a semi-trailer, a fuel truck or fuel depot, or any of a wide variety of other material reservoir systems.

In the example shown in FIG. 1, a material transfer control system 110 can identify the amount of material that will be needed by agricultural work machine 102 as a material target amount. The material target amount can then be loaded into tender vehicle 106 from material reservoir system 108 so that tender vehicle 106 can proceed to agricultural work machine 102 and load agricultural work machine 102 with the material target amount. In this way, tender vehicle 106 will not be overloaded or underloaded with the material. The material transfer control system 110 can also measure the amount of material that is actually transferred from material reservoir system 108 to tender vehicle 106 and the amount of material transferred from tender vehicle 106 to agricultural work machine 102. Material transfer control system 110 can automatically communicate that amount to tender vehicle 106, material reservoir system 108, and/or agricultural work machine 102. It will thus be noted that portions of material transfer control system 110 can be located on tender vehicle 106, on material reservoir system 108, on agricultural work machine 102, in a remote server environment (described below), or elsewhere. Similarly, material transfer control system 110 can be distributed among vehicle 106, material reservoir system 108, machine 102, and/or other locations. Material transfer control system 110 is shown as a separate system in FIG. 1 for the sake of example only.

Also, in the example shown in FIG. 1, tender vehicle 106 includes operator interface system 112, material carrying system 114, material conveyance system 116, communication system 118, and any of a wide variety of other tender vehicle functionality 120. An operator 122 can interact with operator interface mechanisms in operator interface system 112 to control and manipulate tender vehicle 106.

Agricultural work machine 102 can include operator interface system 124, material holding system 126, communication system 128, location system 130, material usage system 132 (which, itself, can include application system 134, consumption system 136, and other items 138), and a wide variety of other work machine functionality 140. FIG. 1 also shows that operator 142 can interact with interface mechanisms on operator interface system 124 to control and manipulate agricultural work machine 102.

Operator interface systems 112 and 124 can be similar or different. They can include such things as joysticks, steering wheels, pedals, levers, linkages, etc. Similarly, systems 112 and 124 can include audio, visual, and haptic input/output mechanisms that generate information for operators 122 and 142, respectively, and that receive inputs from those operators. Systems 112 and 124 can include display screens, touch sensitive display screens, or other types of output systems. Where a display screen is used, the display screen can show operator actuatable input mechanisms which can include such things as icons, links, buttons, etc. The operator actuatable input mechanisms can be actuated using, for example, a point and click device, a touch gesture, a voice command, etc. Material carrying system 114 on tender vehicle 106 can include one or more bins or tank systems that can be filled at material reservoir 108. Material conveyance system 116 is a system that conveys the material from material carrying system 114 to material holding system 126 on agricultural work machine 102. Therefore, material conveyance system 116 can include an elevator, an auger, a conveyor, a blower or other pneumatic system, or another type of conveyance system.

Communication system 118 illustratively allows operator 122 and items on tender vehicle 106 to communicate with one another and with other systems or other machines. Communication system 118 can thus be a cellular communication system, a wide area network communication system, a local area network communication system, a near field communication system, a Bluetooth or Wi-Fi system, a cellular communication system, a controller area network (CAN) bus, and bus controller, etc. Tender vehicle 106 can of course include a wide variety of other tender vehicle functionality 120.

A material holding system 126 on agricultural work machine 102 may be one or more material carrying bins or tanks that hold material that is to be applied to the field by agricultural work machine 102 or that is to be consumed by agricultural work machine 102. For instance, where agricultural work machine 102 is an air seeder, material holding system 126 may include tanks on the air cart, the fuel tank on the tractor or other towing vehicle, batteries on an electric vehicle, or other material holding system. Communication system 128 can be similar to, or different from, communication system 118 on tender vehicle 106. Location system 130 may be a global navigation satellite system (GNSS) receiver, a cellular triangulation system, a dead reckoning system, or any of a wide variety of other location systems.

Material usage system 132 can include application system 133 which applies material from material holding system 126 to the field, as well as consumption system 136 which consumes material from the material holding system. For instance, where agricultural work machine 102 is a planter, application system 134 may include one or more seed metering systems and seed delivery systems. Where agricultural work machine 102 is an air seeder, application system 134 may include a meter that meters material from material holding system 126 into primary and/or secondary delivery tubes, a blower that provides an air stream to deliver the material through the tubes, and other systems. Where agricultural work machine 102 is a sprayer, then application system 134 may include pumps or valves, along with nozzles, etc.

Fuel consumption system 136 may be an engine or other power plant that consumes fuel or electricity. Consumption system 136 can include any of a variety of other consumption systems as well.

Material transfer control system 110 can obtain access to data (from a remote server environment, from a local data store, based on user inputs, or in other ways), and identify the amount of material that will be used by agricultural work machine 102 during a relevant time period, during a relevant operation, etc. Material transfer control system 110 can communicate that amount of material, as a target amount, to tender vehicle 106 and/or material reservoir system 108 so that the target amount of material can be loaded into material carrying system 114 on tender vehicle 104. Tender vehicle 106 can then travel to agricultural work machine 102 (or work machine 102 can travel to tender vehicle 106) until vehicle 106 and machine 102 are in a position relative to one another so that material can be transferred from tender vehicle 106 to agricultural work machine 102. Components on material transfer control system 110 can then control material conveyance system 116 on tender vehicle 106 to convey the desired amount of material to the material holding system 126 on agricultural work machine 102. Material transfer control system 110 can then use operator interface systems 112 and 124 to automatically generate outputs to operators 122 and 142, respectively, indicating that the desired amount of material has been transferred. Where material holding system 126 includes a plurality of different material carrying vessels or tanks, then material transfer control system 110 can control material conveyance system 116 to fill those tanks evenly or according to another desired ratio. Material transfer control system 110 can also automatically provide an output to agricultural work machine 102 and/or tender vehicle 106 indicating the amount of material that has been transferred to each tank or holding vessel in material holding system 126. Material transfer control system 110 can also communicate other information, such as information about the material. Such other information can include seed variety, manufacturer, date of manufacture, germination rate, chemical composition, material density, etc.

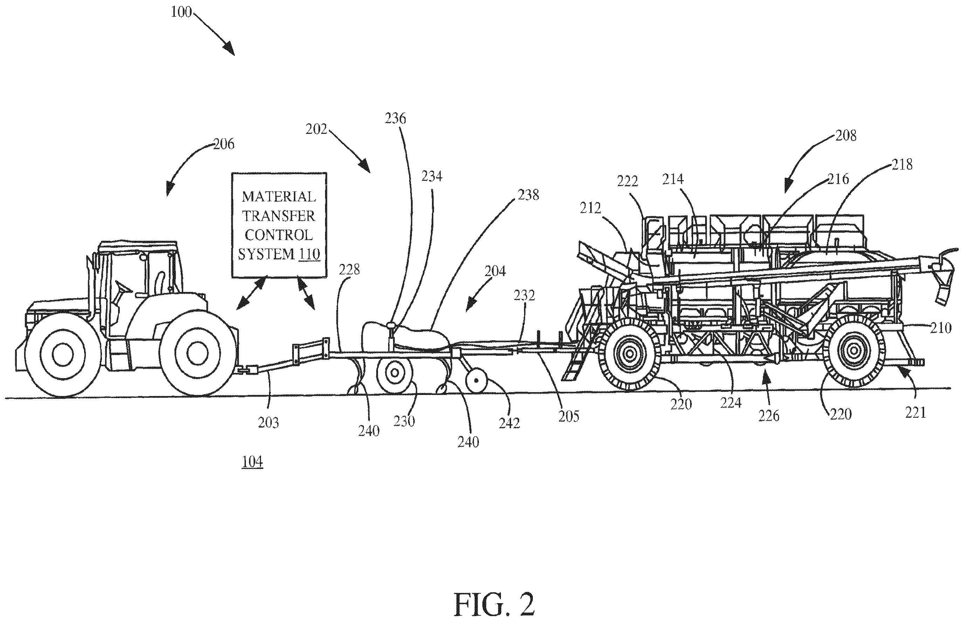

FIG. 2 is a side view of an example of a portion agricultural system 100 which includes an agricultural work machine 102, in particular an air or pneumatic seeder 202. In the example shown in FIG. 2, the seeder 202 comprises a tilling implement (or seeding tool) 204 (also sometimes called a drill) towed between a tractor (or other towing vehicle) 206 and a commodity cart (also sometimes called an air cart) 208. The commodity cart 208 has a frame 210 upon which wheels 220 and a material holding system 126 (from FIG. 1) is provided in the form of a series of product tanks 212, 214, 216, and 218 are mounted. Each product tank has a door (a representative door 222 is labeled) releasably sealing an opening at the upper end of the tank for filling the tank with product, most usually seed or a commodity of one type or another. A metering system 224 is provided at a lower end of each tank (a representative one of which is labeled in FIG. 2) for controlled feeding or draining of product (most typically granular material) into a pneumatic distribution system 226. The tanks 212, 214, 216, and 218 can hold, for example, a material or commodity such as seed or fertilizer to be distributed to the soil. The tanks of the material holding system can be hoppers, bins, boxes, containers, etc. The term "tank" shall be broadly construed herein. Furthermore, one tank with multiple compartments can also be provided instead of separate tanks.

The tilling implement 204 includes a frame 228 supported by ground engaging wheels 230. Frame 228 is connected to a leading portion of the commodity cart 208, for example by a tongue style attachment (not labeled). The commodity cart 208 as shown is sometimes called a "tow behind cart," meaning that the cart 208 follows the tilling implement 204. In an alternative arrangement, the cart 208 can be configured as a "tow between cart," meaning the cart 208 is between the tractor 206 and tilling implement 204. In yet a further possible arrangement, the commodity cart 208 and tilling implement 204 can be combined to form a unified rather than separated configuration. These are just examples of additional possible configurations. Other configurations are even possible and all configurations should be considered contemplated and within the scope of the present description.

In the example shown in FIG. 2, tractor 206 is coupled by couplings 203 to seeding tool 204 which is coupled by couplings 205 to commodity cart 208. The couplings 203 and 205 can be mechanical, hydraulic, pneumatic, and electrical couplings and/or other couplings. The couplings 203 and 205 can include wired and wireless couplings as well.

The pneumatic distribution system 226 includes one or more fans or blowers located generally at 221 connected to a product delivery conduit structure having multiple product flow passages 232 referred to as primary delivery tubes 232. The fan directs air through the primary delivery tubes 232. Each product metering system 224 controls delivery of product from its associated tank at a controllable rate to the transporting airstreams moving through primary delivery tubes 232. In this manner, each flow passage defined by each primary delivery tube 232 carries product from one or more of the tanks to a secondary distribution tower 234 on the tilling implement 204. Typically, there may be one tower 234 for each primary delivery tube 232. Each tower 234 includes a secondary distributing manifold 236, typically located at the top of a vertical tube. The secondary distributing manifold 236 divides the flow of product into a number of secondary distribution tubes 238. Each secondary distribution tube 238 delivers product to one of a plurality of ground engaging tools 240 (also known as ground openers or furrow openers) that define the locations of work points on tilling implement 204. The ground engaging tools (or furrow openers) 240 open a furrow in the soil 104 and facilitate deposit of the product therein. The number of primary delivery tubes 232 that feed into secondary distribution may vary from one to eight or ten or more, depending at least upon the configuration of the commodity cart 208 and tilling implement 204. Depending upon the cart and implement, there may be two distribution manifolds 236 in the air stream between the meters 224 and the ground engaging tools 240. Alternatively, in some configurations, the product is metered directly from the tank or tanks into secondary distribution lines that lead to the ground engaging tools 240 without any need for an intermediate distribution manifold. The product metering system 224 can be configured to vary the rate of delivery of seed or other material to each work point on tilling implement 204 or to different sets or zones of work points on tilling implement 204. The configurations described herein are only examples. Other configurations are possible and should be considered contemplated and within the scope of the present description.

Examples of air or pneumatic seeder 202 described above should not be considered limiting. The features described in the present description can be applied to any seeder configuration, or other material application machine, whether specifically described herein or not.

It will also be appreciated that all or portions of material transfer control system 110 can reside on towing vehicle 206, or on seeder 204, or be distributed at different locations in system 100, or on a remote system or machine, or elsewhere.

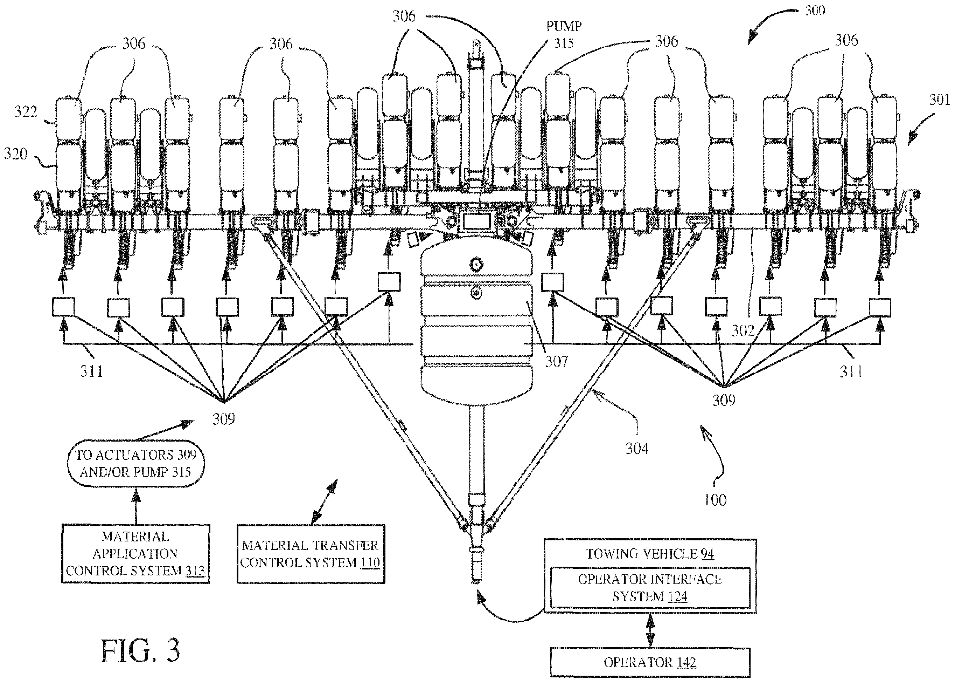

FIG. 3 is a partial pictorial, partial schematic top view of another example of an agricultural system 100 that includes, as agricultural work machine 102, agricultural planting machine 300, towing vehicle 94 that is operated by operator 142, machine application control system 110, and material application control system 313. Systems 110, 313 can be on one or more individual parts of machine 300, centrally located on machine 300, or on towing vehicle 94. Operator 142 can illustratively interact with operator interface system 124 to manipulate and control vehicle 94, systems 110, 313, and some or all portions of machine 300.

Machine 300 is a row crop planting machine that illustratively includes a toolbar 302 that is part of a frame 304. FIG. 3 also shows that a plurality of planting row units 306 are mounted to the toolbar 302. Row units 306 can each have a seed hopper or seed tank 320 as well as a commodity tank or hopper 322. The seed and commodity can be delivered from tanks or hoppers 320, 322 to the ground. Machine 300 can be towed behind towing vehicle 94, such as a tractor. FIG. 3 shows that material can also, or instead, be stored in a tank 307 and pumped through a supply line 311 so the material can be dispensed in or near the rows being planted. In one example, a set of devices (e.g., actuators) 309 is provided to perform this operation. For instance, actuators 309 can be individual pumps that service individual row units 306 and that pump material from tank 307 through supply line 311 so the material can be dispensed on the field. In such an example, material application control system 313 controls the pumps 309. In another example, actuators 309 are valves or nozzles and one or more pumps 315 pump the material from tank 307 to valves or nozzles 309 through supply line 311. In such an example, material application control system 313 controls valves or nozzles 309 by generating valve or nozzle control signals, e.g., on a per-seed basis, as described below. The present discussion proceeds by describing the actuator 309 as a valve or actuator. It will be noted that actuator 309 can be a pump, a nozzle, a valve, or another actuator or combination of actuators. The control signal for each actuator 309 can, in one example, be a pulse width modulated control signal. The flow rate through the corresponding valve 309 can be based on the duty cycle of the control signal (which controls the amount of time the valve is open and closed). The flow rate can be based on multiple duty cycles of multiple valves or based on other criteria. Further, the material can be applied in varying rates on a per-seed or per-plant basis. For example, fertilizer may be applied at one rate when the fertilizer is being applied at a location spaced from a seed location and at a second, higher, rate when the fertilizer is being applied closer to the seed location. These are examples only.

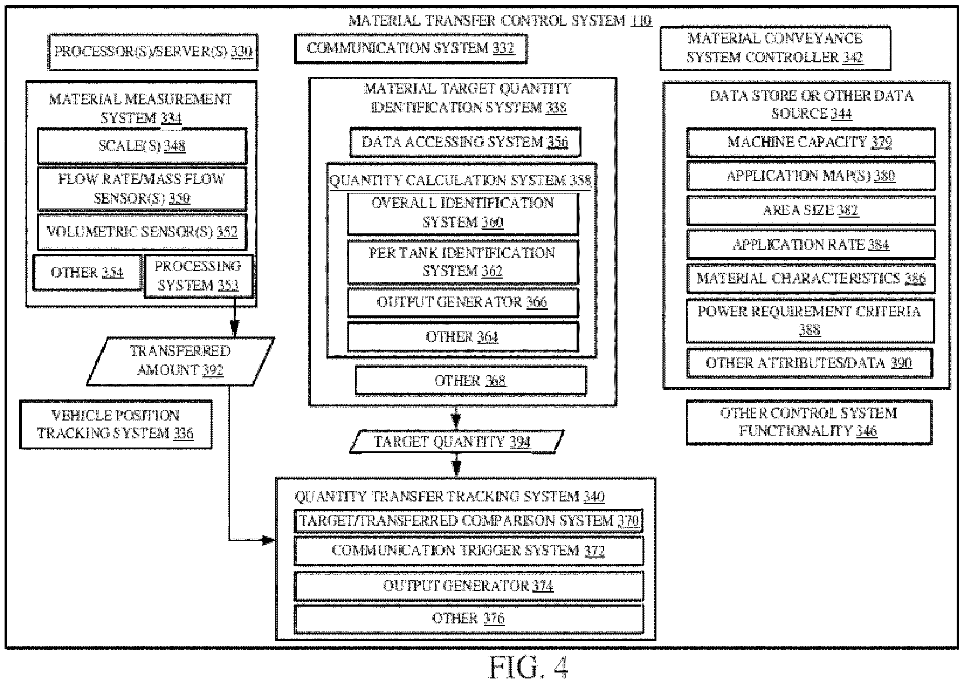

FIG. 4 is a block diagram showing one example of material transfer control system 110 in more detail. Material transfer control system 110 can be located on agricultural work machine 102 and/or tender vehicle 106 and/or other locations. Also, some parts of system 110 can be located on machine 102 while some parts are on tender vehicle 106 and/or some parts are located elsewhere. In the example shown in FIG. 4, material transfer control system 110 includes one or more processors or servers 330, communication system 332, material measurement system 334, vehicle position tracking system 336, material target quantity identification system 338, quantity transfer tracking system 340, material conveyance system controller 342, data store or other data source(s) 344, and a wide variety of other control system functionality 346. Material measurement system 334 can include scales 348, flow rate sensors 350, volumetric sensors 352, processing system 353, and/or any of wide variety of other sensors 354. Material target quantity identification system 338 can include data accessing system 356, quantity calculation system 358 (which can include overall quantity identification system 360, per tank quantity identification system 362, and other items 364), output generator 366 and other functionality 368. Quantity transfer tracking system 340 can include target/transferred comparison system 370, communication trigger system 372, output generator 374, and other items 376. Data store or other data source 344 can include machine capacity data 379, application maps 380, area size indicators 382, application rate information 384, material characteristics 386, power requirement criteria 388, and any of a wide variety of other attributes or data 390. Before describing the overall operation of material transfer control system 110 in more detail, a description of some of the items in material transfer control system 110, and their operation, will first be provided.

Communication system 332 can be a CAN bus and bus controller, and/or any of the other communication systems discussed above with respect to communication systems 118 and 128. Material measurement system 334 illustratively measures the material that is transferred from material reservoir system 108 to tender vehicle 106 and the material transferred from tender vehicle 106 to agricultural work machine 102. Therefore, material measurement system 334 can include scales 348 that are on tender vehicle 106, material reservoir system 108, and/or agricultural work machine 102.

Flow rate sensors 350 can sense the rate of flow (such as mass flow or other characteristic of flow) of material transferred to tender vehicle 106 and/or transferred by material conveyance system 116 in tender vehicle 106 to the material holding system 126 in agricultural work machine 102. Volumetric sensors 352 can be sensors that sense the volume of material in material carrying system 114 and/or material holding system 126. Therefore, such sensors can include RADAR sensors, laser sensors, or any other sensors that can, for instance, sense the level of material in the material carrying system 114 and/or the material holding system 126. Processing system 353 can receive the sensor signal generated by scales 348, sensors 350, and/or sensors 352 and generate a loaded amount indicator indicative of an amount of material loaded on tender vehicle 106 from material reservoir system 108 and a transferred amount indicator 392 indicative of the amount of material that is transferred from tender vehicle 106 to agricultural work machine 102. The loaded amount indicator and the transferred amount indicator 392 can be in any desired units, such as in units of weight, volume, the number of seeds or gallons or quarts of fertilizer or herbicide, the gallons of fuel, or any other desired units. It will be noted that sensors can be on machine 102 and/or tender vehicle 106 and/or elsewhere.

In one example, vehicle position tracking system 336 can track the relative positions of tender vehicle 106 and agricultural work machine 102 to determine when the two are within a desired proximity of one another so that material conveyance can begin. Thus, vehicle position tracking system 336 can receive an input from tender vehicle 106 (such as from a GNSS receiver, etc.) indicative of the location of tender vehicle 106, as well as an input from location system 130 on agricultural work machine 102. Vehicle position tracking system 336 can then track the position of the two vehicles relative to one another and generate an output when they are in a desired proximity of one another. In another example, vehicle position tracking system 336 can be a RADAR system, an optical sensor, a laser sensor and/or other sensors that sense the relative position (e.g., distance and direction) of the two vehicles, relative to one another.

Material target quantity identification system 338 identifies the target quantity of material that tender vehicle 106 is supposed to transfer to agricultural work machine 102. In one example, system 338 can receive a request from agricultural work machine 102 indicating the target amount of material that is being requested. In that case, output generator 366 can generate an output to material reservoir system 108 so that tender vehicle 106 is loaded with the target amount of material (e.g., plus or minus a threshold amount). Output generator 366 can also generate an output (e.g., target quantity indicator 394) to tender vehicle 106 and/or to quantity transfer tracking system 340 so that the target amount of materi al will be transferred from tender vehicle 106 to agricultural work machine 102.

In another example, material target quantity identification system 338 accesses data that is indicative of the amount of material that is to be transferred from tender vehicle 106 to agricultural work machine 102 and calculates the target quantity based upon that data. Data accessing system 366 can, for instance, access data from data store or other data source 344 (which may be a local data store, a remote or cloud based data store, another machine, another system, etc.) to obtain the data needed to calculate the target amount of material. Data accessing system 356 can, for instance, access machine capacity data 379 indicative of the capacity of the material holding system 126 on agricultural work machine 102. Where agricultural work machine 102 is an air seeder, for instance, then the machine capacity data 379 may indicate the capacity of each of the tanks 212, 214, 216, and 218 on the air seeder shown in FIG. 2. Where the agricultural work machine 102 is a planter with row units, then machine capacity data 379 may identify the capacity of hoppers or tanks 320 and 322 on each of the row units, as well as the number of row units so that the overall amount of material needed to refill planter 300 (shown in FIG. 3) can be calculated. Where the agricultural work machine 102 is a sprayer, then the machine capacity data 379 may identify the capacity of the tanks on the sprayer. These are examples only.

Data accessing system 356 can also access application maps 380 which may include a prescription for the amount of material to be applied to the field 104 where agricultural work machine 102 is operating. The data may include area size data 382 that identifies the size of the area of the field 104 where agricultural work machine 102 is working. The data can include application rate data 384 indicative of a prescribed or default rate at which material is to be applied (such as chemical application rate, seed population data, etc.). The data accessed by data accessing system 356 may also include other material characteristics 386. Such characteristics may include material density, material weight, other material size characteristics, as well as other data such as manufacturer data, date of manufacture, germination data or chemical composition, etc. The data obtained by data accessing system 356 can also include power requirement criteria 388 which can be used to determine an estimated amount of fuel (such as diesel fuel or electricity provided by batteries) that will be consumed by agricultural work machine 102. Data accessing system 356 can obtain this and/or other data and provide that data to quantity calculation system 358.

Overall quantity identification system 360 may then calculate or otherwise identify the overall quantity of material that is to be transferred from tender vehicle 106 to agricultural work machine 102. For instance, if overall quantity identification system 360 identifies an application rate based on application rate data 384 and the size of an area to be treated based upon area size data 382, overall quantity identification system 360 can generate an output indicative of the overall quantity of material that should be transferred from tender vehicle 106 to agricultural work machine 102. That amount of material can also be loaded into tender vehicle 106 from material reservoir system 108.

Further, based upon the machine capacity data 379, quantity calculation system 358 may determine that agricultural work machine 102 has a plurality of different tanks or hoppers. Each tank may be of the same size or of different sizes. In that case, per tank identification system 362 can identify the amount of material and the type of material to be transferred to each tank on agricultural work machine 102. Output generator 366 can generate an output indicative of the target quantity of material, as output 394. Output 394 can be output to quantity transfer tracking system 340 and/or output to other systems by communication system 332, and can identify the overall target quantity of material and/or the target amount for each tank.

Vehicle position tracking system 336 can track the position of tender vehicle 106 relative to agricultural work machine 102. The tracking can be done automatically and/or based on operator input. For instance, the operator can provide an input indicating that the vehicles are in the proper position as well. Material conveyance system controller 342 can control material conveyance system 116 to begin conveying material from tender vehicle 106 to agricultural work machine 102 when the two vehicles are within a desired position relative to one another, as indicated by vehicle position tracking system 336.

Once quantity transfer tracking system 340 has the target quantity 394 of material to be transferred from tender vehicle 106 to agricultural work machine 102, then quantity transfer tracking system 340 can track the amount of material transferred, as the transfer operation is being performed, based upon the transferred amount indicator 392. System 340 can then generate an output when the transferred amount 392 is within a threshold value of target quantity 394.

For instance, target/transferred comparison system 370 compares the transferred amount 392 to the target quantity 394 as material is transferred. When the transferred amount 392 is within a desired threshold of the target quantity 394, then communication trigger system 372 can trigger communication of that, and the transferred amount, to the operator 142 of agricultural work machine 102. In one example, communication trigger system 372 establishes a communication link between tender vehicle 106 and agricultural work machine 102, if one has not already been established. Output generator 374 then generates an output over that communication link identifying the amount of material that has been transferred, or another output that indicates whether the target amount of material has been transferred from tender vehicle 106 to agricultural work machine 102. Out generator 374 can also generate an output to material conveyance control system 342 so that material conveyance control system 342 can automatically stop material conveyance system 116 once the target quantity 394 has been transferred.

Similarly, where agricultural work machine 102 has a plurality of different tanks, then the same operation can be performed with respect to each tank so that the transferred amount 392 can be compared against the target quantity 394 for a tank that is currently being filled. Once that tank is filled to a desired level, output generator 374 can generate an output to material conveyance system controller 342 so that controller 342 stops material conveyance system 116 and so that the two vehicles can be repositioned relative to one another so that a next tank on agricultural work machine 102 can be filled.

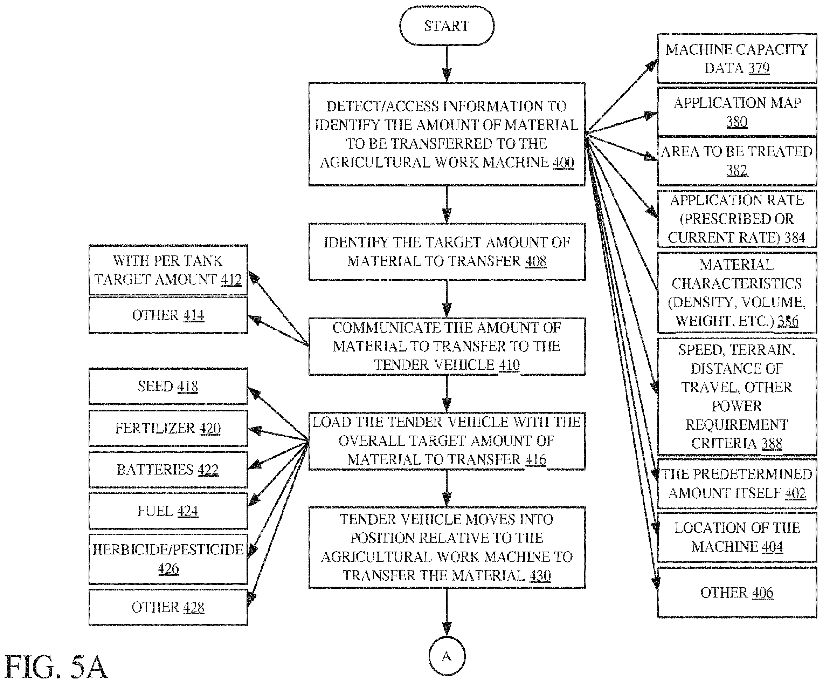

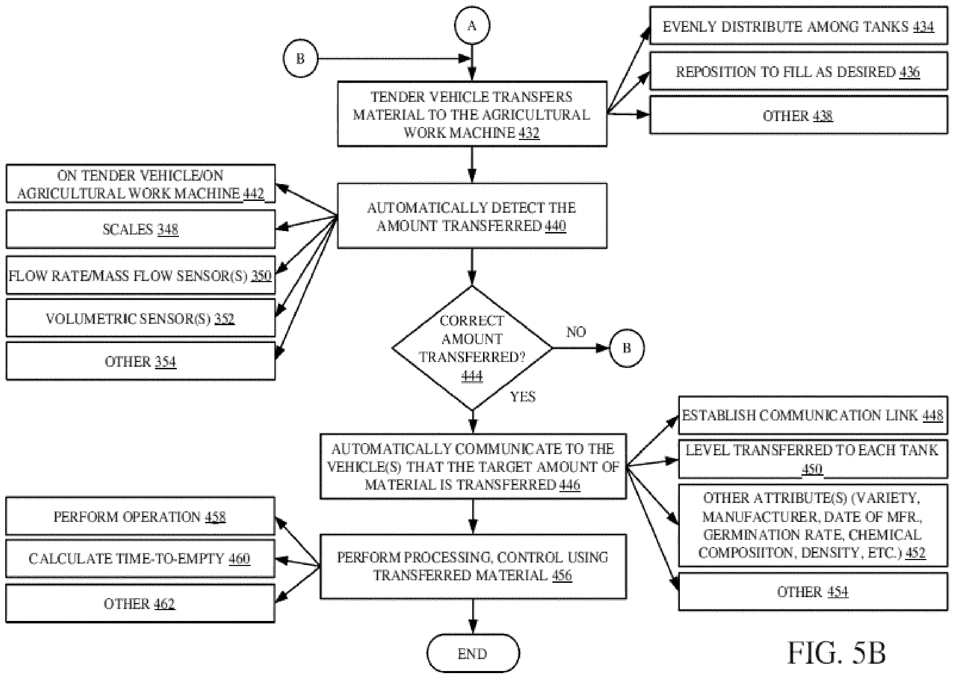

FIG. 5 is a flow diagram illustrating one example of the operation of material transfer control system 110. Data accessing system 356 first detects or accesses information used to identify the target amount of material to be transferred to the agricultural work machine 102 from tender vehicle 106, as indicated by block 400 in the flow diagram of FIG. 5. As discussed above, such information can include machine capacity data 379, application map 380, a requested amount 402 that may be requested by the agricultural work machine 102 itself or its operator 142, application rate data 384, machine location data 404, area size data 382, material characteristics 386, power requirement criteria 388 (such as the estimated speed of agricultural work machine 102, the terrain over which it will be traveling, the distance of travel, fuel consumption data, and/or other power requirement criteria 388). The data obtained or accessed by data accessing system 356 can include a wide variety of other data 406 as well.

Material target quantity identification system 338 then identifies the target amount of material that will be transferred from tender vehicle 106 to agricultural work machine 102. Identifying the target amount of material is indicated by block 408 in the flow diagram of FIG. 5. Quantity calculation system 358 can use overall quantity identification system 360 to identify an overall target quantity of material which can be used by tender vehicle 106 to load material from material reservoir system 108. Per tank identification system 362 can identify the amount of material to be transferred from tender vehicle 106 to each tank in the material holding system 126 of agricultural work machine 102, which can be used by tender vehicle 106 in transferring material to agricultural work machine 102. Communicating the target amount of material to transfer is indicated by block 410 in the flow diagram of FIG. 5. Communicating the per tank target amount of material to be transferred to each tank is indicated by block 412. The target amount of material to transfer can be communicated to tender vehicle 106 with other information or in other ways as well, as indicated by block 414.

Material reservoir system 108 then loads the tender vehicle 106 with the overall target amount of material, as indicated by block 416 in the flow diagram of FIG. 5. The material measurement system 334 can measure the amount of material loaded from material reservoir system 108 onto tender vehicle 106 and generate a loaded amount output (like transferred account indicator 392) so quantity transfer tracking system 340 can generate an output indicating when tender vehicle 106 has been loaded with the target amount. As discussed elsewhere herein, the material can be seed 418, fertilizer 420, charged batteries or a battery charging pack 422, fuel 424, herbicide or pesticide 426, or any of a wide variety of other material that will be applied by agricultural work machine 102 to field 104 or that will be consumed by agricultural work machine 102, as indicated by block 428 in the flow diagram of FIG. 5.

Tender vehicle 106 then moves into position relative to the agricultural work machine 102 to transfer the material using material conveyance system 116. Moving the two vehicles into position relative to one another can be done automatically, or manually, or semi-automatically. Moving the vehicles into position relative to one another for material transfer is indicated by block 430 in the flow diagram of FIG. 5. Again, vehicle position tracking system 336 can be used to track the relative positions or absolute positions of the two vehicles and can also be used to generate control signals to automatically maneuver the vehicles relative to one another. Once the vehicles are in the proper position relative to one another (as detected by vehicle position tracking system 336, or as indicated by a manual input or otherwise), system controller 342 generates control signals to control material conveyance system 116 to transfer material from the tender vehicle 106 to agricultural work machine 102, as indicated by block 432 in the flow diagram of FIG. 5. Again, material conveyance system controller 342 can generate control signals to automatically control material conveyance system 116, or that control can be based on operator inputs or controlling material conveyance system 116 can be performed in other ways. By automatically it is meant that, in one example, the function or operation is performed without further human involvement except, perhaps, to initiate or authorize the function or operation.

In one example, quantity transfer tracking system 340 can be used so that system controller 342 controls material conveyance system 116 to evenly distribute material among the various tanks in material holding system 126, as indicated by block 434 in the flow diagram of FIG. 5. System controller 342 can also generate control signals to control the propulsion and steering systems on the tender vehicle 106 and/or agricultural work machine 102 to reposition the vehicles relative to one another, as indicated by block 436. Transferring the material can be performed in other ways as well, as indicated by block 438.

Quantity transfer tracking system 340 automatically detects the amount of material transferred, as indicated by block 440 in the flow diagram of FIG. 5. Detection of the amount of material transferred can be performed either on tender vehicle 106 or on agricultural work machine 102 or both, as indicated by block 442 in the flow diagram of FIG. 5. That detection can be performed using scales 348, flow rate/mass flow sensors 350, volumetric sensors 352, or other meters or other sensors 354. Target/transferred comparison system 370 tracks the transferred amount 392 relative to the target quantity 394 to determine whether the target amount of material has been transferred to the current agricultural work machine 102, for the tank currently being filled on agricultural work machine 102, etc., as indicated by block 444 in the flow diagram of FIG. 5. If the correct amount has not yet been transferred, processing reverts to block 432 where material conveyance system controller 342 continues to control the material conveyance system 116 on tender vehicle 106 to convey material to agricultural work machine 102. If, however, it is determined at block 444 that the target amount of material has been transferred, then output generator 374 can generate an output to control material conveyance system controller 342 to stop material transfer and communication trigger system 372 triggers communication system 332 to automatically communicate to tender vehicle 106 and/or agricultural work machine 102 that the target amount of material has been transferred, as indicated by block 446 in the flow diagram of FIG. 5. Again, system 372 can cause communication system 330 to establish a communication link 448 and communicate the amount or level of material transferred to each tank on agricultural machine 102, as indicated by block 450. Communication trigger system 372 can also trigger communication system 332 to communicate other attributes, such as the variety of seed transferred, the manufacturer, date of manufacture, germination rate, chemical composition of commodity transferred, material density, or other attributes 452. Automatically communicating information to the vehicles can be done in a wide variety of other ways as well, as indicated by block 454.

Agricultural work machine 102 and/or tender vehicle 106 can then perform processing or control using the transferred material, or using the target amount transferred, as indicated by block 456. For instance, agricultural work machine 102 can perform the application operation or other operation to use the transferred material, as indicated by block 458. Either or both of the vehicles and machines 106, 102 can calculate the time-to-empty so that the time is known when the next material transfer operation from tender vehicle 106 to agricultural work machine 102 is to be completed, as indicated by block 460. A wide variety of other processing or control can be performed as well, as indicated by block 462.

The present description thus describes a system in which the target amount of material to be transferred from a tender vehicle to an agricultural work machine can be detected or computed. That target amount can be used to load material into the tender vehicle, and it can also be used to control transfer of material from the tender vehicle to the agricultural work machine. The amount of material actually transferred from the tender vehicle to the agricultural work machine is automatically measured and communicated to systems that use it, such as the agricultural work machine, the tender vehicle, or other systems. The indication of the amount transferred can be used in performing processing such as time-to-empty processing, identifying a location where the agricultural work machine will need to be refilled, and/or any of a wide variety of other processing or control.

The present discussion has mentioned processors and servers. In one example, the processors and servers include computer processors with associated memory and timing circuitry, not separately shown. They are functional parts of the systems or devices to which they belong and are activated by, and facilitate the functionality of the other components or items in those systems.

Also, a number of user interface (UI) displays have been discussed. The UI displays can take a wide variety of different forms and can have a wide variety of different user actuatable input mechanisms disposed thereon. For instance, the user actuatable input mechanisms can be text boxes, check boxes, icons, links, drop-down menus, search boxes, etc. The mechanisms can also be actuated in a wide variety of different ways. For instance, the mechanisms can be actuated using a point and click device (such as a track ball or mouse). The mechanisms can be actuated using hardware buttons, switches, a joystick or keyboard, thumb switches or thumb pads, etc. The mechanisms can also be actuated using a virtual keyboard or other virtual actuators. In addition, where the screen on which they are displayed is a touch sensitive screen, they can be actuated using touch gestures. Also, where the device that displays them has speech recognition components, the mechanisms can be actuated using speech commands.

A number of data stores have also been discussed. It will be noted the data stores can each be broken into multiple data stores. All can be local to the systems accessing them, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

It will be noted that the above discussion has described a variety of different systems, components, generators, and/or logic. It will be appreciated that such systems, components and/or logic can be comprised of hardware items (such as processors and associated memory, or other processing components, some of which are described below) that perform the functions associated with those systems, components, generators, and/or logic. In addition, the systems, components, generators, and/or logic can be comprised of software that is loaded into a memory and is subsequently executed by a processor or server, or other computing component, as described below. The systems, components, generators, and/or logic can also be comprised of different combinations of hardware, software, firmware, etc., some examples of which are described below. These are only some examples of different structures that can be used to form the systems, components, generators, and/or logic described above. Other structures can be used as well.

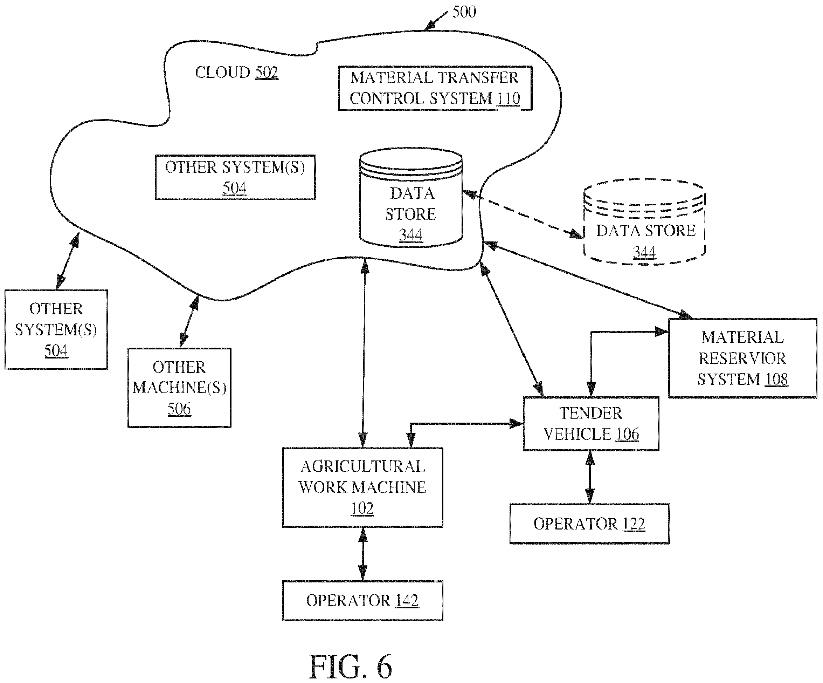

FIG. 6 is a block diagram of agricultural system 100, shown in FIG. 1, except that it communicates with elements in a remote server architecture 500. In an example, remote server architecture 500 can provide computation, software, data access, and storage services that do not require end-user knowledge of the physical location or configuration of the system that delivers the services. In various examples, remote servers can deliver the services over a wide area network, such as the internet, using appropriate protocols. For instance, remote servers can deliver applications over a wide area network and they can be accessed through a web browser or any other computing component. Software or components shown in previous FIGS. as well as the corresponding data, can be stored on servers at a remote location. The computing resources in a remote server environment can be consolidated at a remote data center location or they can be dispersed. Remote server infrastructures can deliver services through shared data centers, even though they appear as a single point of access for the user. Thus, the components and functions described herein can be provided from a remote server at a remote location using a remote server architecture. Alternatively, the components and functions can be provided from a conventional server, or they can be installed on client devices directly, or in other ways.

In the example shown in FIG. 6, some items are similar to those shown in previous FIGS. and they are similarly numbered. FIG. 6 specifically shows that material transfer control system 110, data store 344, and other systems 504 can be located at a remote server location 502. Therefore, agricultural work machine 102, tender vehicle 106, and other machines 506 access those systems through remote server location 502.

FIG. 6 also depicts another example of a remote server architecture. FIG. 6 shows that it is also contemplated that some elements of previous FIGS are disposed at remote server location 502 while others are not. By way of example, data store 344 or other systems 504 (or other items) can be disposed at a location separate from location 502, and accessed through the remote server at location 502. Regardless of where the items are located, the items can be accessed directly by machine 102, vehicle 106, and/or other systems 504 or machines 506, through a network (either a wide area network or a local area network), they can be hosted at a remote site by a service, or they can be provided as a service, or accessed by a connection service that resides in a remote location. Also, the data can be stored in substantially any location and intermittently accessed by, or forwarded to, interested parties. For instance, physical carriers can be used instead of, or in addition to, electromagnetic wave carriers. In such an example, where cell coverage is poor or nonexistent, another mobile machine (such as a fuel truck or other tender vehicle) can have an automated information collection system. As the agricultural work machine 102 comes close to the fuel truck for fueling, the system automatically collects the information from the agricultural work machine 102using any type of ad-hoc wireless connection. The collected information can then be forwarded to the main network as the fuel truck reaches a location where there is cellular coverage (or other wireless coverage). For instance, the fuel truck may enter a covered location when traveling to fuel other machines or when at a main fuel storage location. All of these architectures are contemplated herein. Further, the information can be stored on the harvester until the agricultural work machine 102 or tender vehicle 106 entering a covered location. The agricultural work machine 102 or tender vehicle 106, itself, can then send the information to the main network.

It will also be noted that the elements of previous FIGS., or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

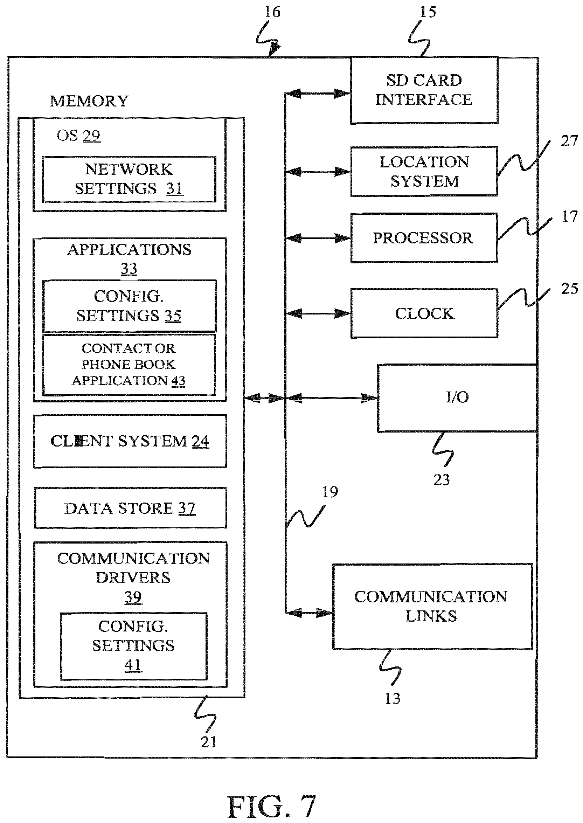

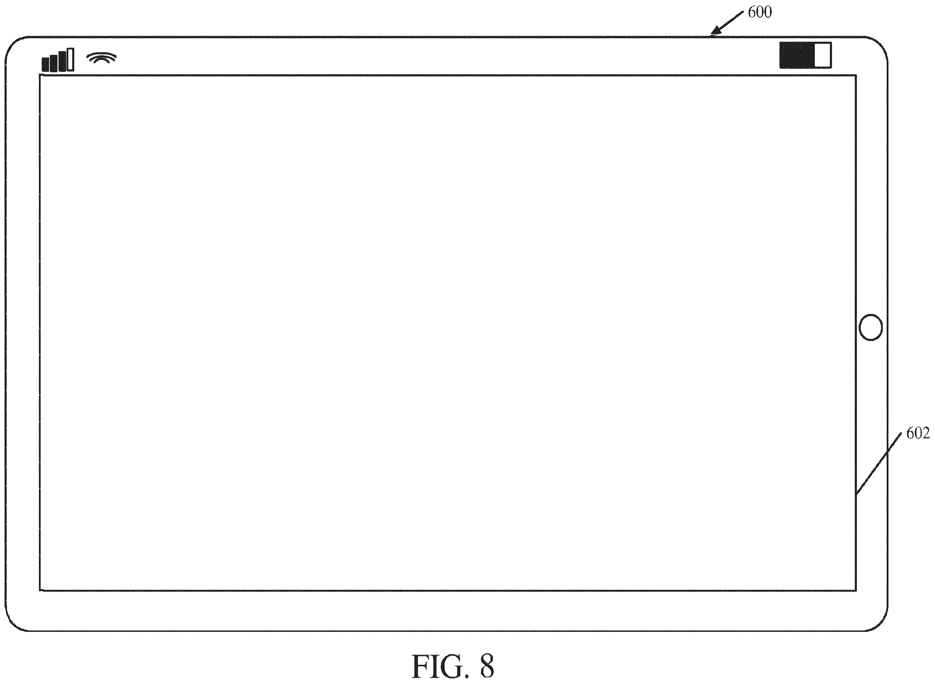

FIG. 7 is a simplified block diagram of one illustrative example of a handheld or mobile computing device that can be used as a user's or client's hand held device 16, in which the present system (or parts of it) can be deployed. For instance, a mobile device can be deployed in the operator compartment of agricultural work machine 102 or tender vehicle 106 for use in generating, processing, or displaying the stool width and position data. FIGS. 8-9 are examples of handheld or mobile devices.

FIG. 7 provides a general block diagram of the components of a client device 16 that can run some components shown in previous FIGS., that interacts with them, or both. In the device 16, a communications link 13 is provided that allows the handheld device to communicate with other computing devices and under some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors or servers from previous FIGS.) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a dead reckoning system, a cellular triangulation system, or other positioning system. Location system 27 can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. Memory 21 can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

FIG. 8 shows one example in which device 16 is a tablet computer 600. In FIG. 8, computer 600 is shown with user interface display screen 602. Screen 602 can be a touch screen or a pen-enabled interface that receives inputs from a pen or stylus. Computer 600 can also use an on-screen virtual keyboard. Of course, computer 600 might also be attached to a keyboard or other user input device through a suitable attachment mechanism, such as a wireless link or USB port, for instance. Computer 600 can also illustratively receive voice inputs as well.

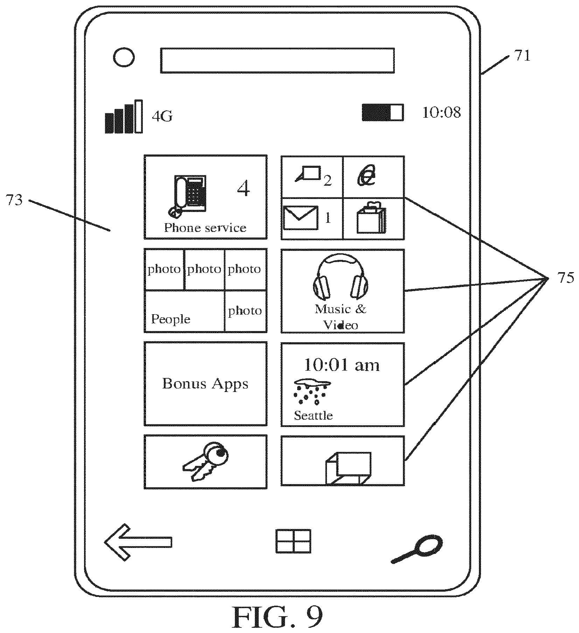

FIG. 9 shows that the device can be a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

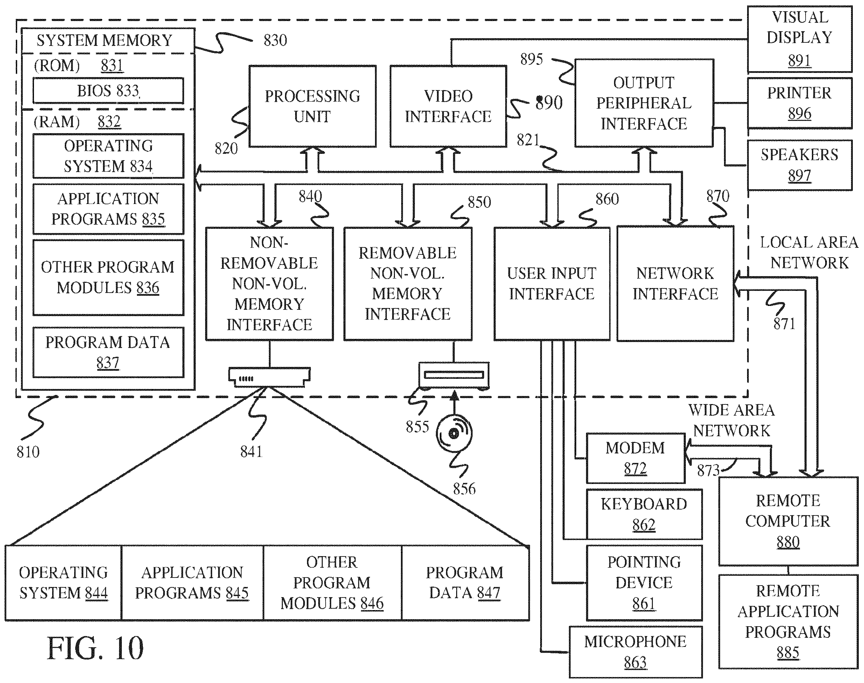

FIG. 10 is one example of a computing environment in which elements of previous FIGS., or parts of it, (for example) can be deployed. With reference to FIG. 10, an example system for implementing some embodiments includes a computing device in the form of a computer 810 programmed to operate as described above. Components of computer 810 may include, but are not limited to, a processing unit 820 (which can comprise processors or servers from previous FIGS.), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to previous FIGS. can be deployed in corresponding portions of FIG. 10.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from, and does not include, a modulated data signal or carrier wave. Computer storage media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 810.

Communication media may embody computer readable instructions, data structures, program modules or other data in a transport mechanism and includes any information delivery media. The term "modulated data signal" means a signal that has one or more of its characteristics set or changed in such a manner as to encode information in the signal.

The system memory 830 includes computer storage media in the form of volatile and/or nonvolatile memory such as read only memory (ROM) 831 and random access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 10 illustrates operating system 834, application programs 835, other program modules 836, and program data 837.

The computer 810 may also include other removable/non-removable volatile/nonvolatile computer storage media. By way of example only, FIG. 10 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 10, provide storage of computer readable instructions, data structures, program modules and other data for the computer 810. In FIG. 10, for example, hard disk drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus, but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections (such as a controller area network - CAN, local area network - LAN, or wide area network WAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules may be stored in a remote memory storage device. FIG. 10 illustrates, for example, that remote application programs 885 can reside on remote computer 880.

It should also be noted that the different examples described herein can be combined in different ways. That is, parts of one or more examples can be combined with parts of one or more other examples. All of this is contemplated herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. An agricultural system (100), comprising:
a material target quantity identification system (338) configured to identify a target quantity of material to transfer from a tender vehicle (106) to an agricultural work machine (102) and generate a target quantity identifier indicative of the target quantity;
a material measurement system (334) configured to measure an amount of material transferred from the tender vehicle (106) to the agricultural work machine (102) and generate a transferred amount indicator indicative of the amount of material transferred from the tender vehicle (106) to the agricultural work machine (102);
a quantity transfer tracking system (340) configured to receive the target quantity identifier and the transferred amount indicator and generate a material transfer output indicative of a relationship between the target quantity and the transferred amount; and
a material conveyance system controller (342) configured to generate a control signal to control transfer of the material from the tender vehicle (106) to the agricultural work machine (102) based on the material transfer output.

2. The agricultural system (100) of claim 1, and further comprising:
a communication system (332) configured to communicate to the agricultural work machine (102) the amount of material transferred to the agricultural work machine (102) from the tender vehicle (106).

3. The agricultural system (100) of claim 1 or 2, wherein the agricultural work machine (102) has a plurality of material carrying tanks (212, 214, 216, 218) and wherein the material conveyance system controller (342) is configured to control transfer of material from the tender vehicle (106) to each of the plurality of material carrying tanks (212, 214, 216, 218).

4. The agricultural system (100) of claim 3, wherein the quantity transfer tracking system (340) is configured to identify an amount of material transferred from the tender vehicle (106) to each of the plurality of material carrying tanks (212, 214, 216, 218).

5. The agricultural system (100) of claim 3 or 4, wherein the communication system (332) is configured to communicate to the agricultural work machine (102) the amount of material transferred to each of the plurality of material carrying tanks (212, 214, 216, 218).

6. The agricultural system (100) of one of the claims 1 to 5, wherein the material target quantity identification system (338) comprises:
a data accessing system (356) configured to access material transfer data and identify the target amount based on the material transfer.

7. The agricultural system (100) of one of the claims 1 to 6, wherein the material measurement system (334) is configured to measure an amount of material transferred from a material reservoir system (108) to the tender vehicle (106) and generate a loaded amount indicator indicative of the amount of material loaded from the material reservoir system (108) to the tender vehicle (106), and wherein the quantity transfer tracking system (340) is configured to receive the target quantity identifier and the loaded amount indicator and generate a material loaded output indicative of a relationship between the target quantity and the loaded amount.

8. The agricultural system (100) of claim 7 wherein the material conveyance system controller (342) is configured to generate a control signal to control transfer of the material from the material reservoir system (108) to the tender vehicle (106) based on the material loaded output.
